# EUROPÄISCHE PATENTSCHRIFT

(11) **EP 0 716 225 B1**
(45) Veröffentlichungstag und Bekanntmachung des Hinweises auf die Patenterteilung: **21.07.1999**
(21) Anmeldenummer: 95119286.3
(22) Anmeldetag: 07.12.1995
(51) Int. Cl.: F02M 27/02, F02B 51/02

(54) **Katalytischer Benzin-Verdampfer zur Inbetriebnahme eines kalten Motors**
Catalytic gasoline vaporizer for starting a cold engine
Vaporisateur catalytique d'essence pour le démarrage d'un moteur froid

(30) Priorität: 10.12.1994 DE 4444071
(43) Veröffentlichungstag der Anmeldung: 12.06.1996
(73) Patentinhaber: Griesser, Lothar, 79733 Görwihl (DE)
(72) Erfinder: Griesser, Lothar, 79733 Görwihl (DE)

(56) Entgegenhaltungen:
- EP-A- 0 022 876
- WO-A-92/20963
- DE-A- 2 359 542
- DE-A- 2 366 067
- DE-A- 2 652 337
- DE-B- 2 811 273
- DE-C- 585 220
- FR-A- 2 325 815
- US-A- 4 876 989
- US-A- 4 884 531

## Beschreibung

Die Erfindung betrifft eine katalytische Vorrichtung zur Verdampfung von Benzin. Die Erfindung dient der Reduktion der Emissionen bei der Inbetriebnahme eines kalten Verbrennungsmotors.

Üblicherweise wird Benzin in flüssiger Form für den Antrieb von Verbrennungsmotoren verwendet. Beim Kaltstart des Motors wird das flüssige Benzin im Überschuss zugeführt, um die Zündung an den Motor-Zündkerzen zu erreichen. Dies führt zu hohen Emissionen. Wenn das Benzin vor der Zufuhr zum Verbrennungsmotor verdampft oder vergast wird, ist kein Überschuss beim Kaltstart erforderlich. Dadurch werden die Emissionen reduziert.

Eine Kraftstoff-Vergasung wird in H. Bünger, "Die heterogen katalysierte Spaltung verschiedener Kohlenwasserstoffe durch partielle Verbrennung", Dissertation TH Darmstadt, 1982, auf S. 1 bis 4 beschrieben. Der Kraftstoff wird in flüssiger Form auf einen Katalysator aufgegeben. Das Volumen von flüssigem Kraftstoff ist jedoch relativ klein im Vergleich zur gleichen Stoffmenge im Dampfzustand. Deshalb wird nur ein kleiner Teil der Katalysatoroberfläche vom Kraftstoff beaufschlagt, was die Wirkung des Katalysators beeinträchtigt.

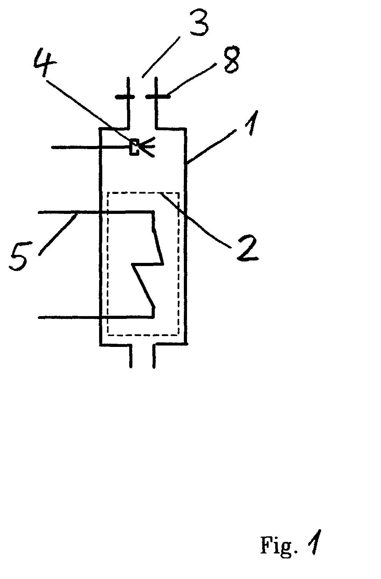

In Abb. 1 dieser Dissertation wird in einem Wärmetauscher das Motorabgas für die Verdampfung des Kraftstoffes vor dem Katalysator genutzt. Die Verdampfung kann erst erfolgen, wenn das Abgas heiss ist, somit erst einige Zeit nach dem Kaltstart. Für die Verdampfung von Benzin beim Kaltstart eines Verbrennungsmotors kann diese Einrichtung somit nicht eingesetzt werden.

In DE-OS 36 09 258 wird ein Heizkörper mit Katalysator für gasförmige Brennstoffe beschrieben. Diese Patentschrift liefert keine Hinweise für die Verdampfung von flüssigen Brennstoffen. In DE-OS 37 16 187 wird eine Fahrzeugheizung beschrieben, bei der einem thermischen Reaktor ein Katalysator vorgeschaltet ist. Es wird angeführt, dass das Benzin vor dem Katalysator durch Rückführung von Wärme aus dem thermischen Reaktor verdampft werden kann. Die Wärmerückführung wird jedoch in DE-OS 37 16 187 nicht weiter beschrieben oder gezeigt.

Ein katalytischer Brenner ist aus US-P 4 927 353 bekannt. Der Brennstoff und die gesamte Luftmenge werden in einer Mischkammer gemischt und über einen Katalysator geleitet. Danach wird das Gas durch einen Austrittsgasraum geleitet. Dieser ist von der Mischkammer durch eine Zwischenwand getrennt. Wärme strömt vom Austrittsgasraum durch die Zwischenwand an das Brennstoff-Luft-Gemisch in der Mischkammer, wodurch der Brennstoff verdampft. Da der Brennstoff in der Mischkammer mit Luft gemischt ist, muss nicht nur die Verdampfungswärme zugeführt werden, sondern das gesamte Brennstoff-Luft-Gemisch erwärmt werden. Hierfür ist die Zwischenwand mit einer relativ grossen Wärmeübertragungsfläche zu versehen. Dieser Brenner ist deshalb aufwendig und weist ein relativ grosses Bauvolumen auf. Dies ist ein Nachteil für die von uns vorgesehene Anwendung bei Verbrennungsmotoren in Fahrzeugen.

Ein Brenner für flüssige Brennstoffe mit einem Spaltgasgenerator aus Sintersteinen ist aus DE-P 22 60 586 bekannt. Die Sintersteine wirken als Katalysator bei der Erzeugung des Spaltgases. Der Brennstoff wird in flüssiger Form über einen Brennstoffverteiler auf die Sintersteine aufgegeben. Beim Starten des Brenners benötigen die Sintersteine infolge ihres Gewichtes eine beträchtliche Zeitdauer, bis sie heiss sind. Dieser Brenner ist somit für den raschen Kaltstart von Verbrennungsmotoren nicht geeignet.

Im katalytischen Brenner von JP 57-104 014 A wird der Brennstoff, der durch einen Zentrifugalverteiler zerstäubt wird, mit der Verbrennungsluft, die durch einen Ventilator gefördert wird, vermischt. Anschliessend wird das Gemisch an einer vorgeheizten Wand erwärmt. Danach folgt eine Flammenzündung mittels einer Zündkerze. Dadurch wird der nachgeschaltete Katalysator vorgeheizt. Dabei besteht die Gefahr, dass der Katalysator durch die Flamme beschädigt wird.

In der Patentschrift US-A-4 876 989 werden Apparate gemäß dem Oberbegriff des Anspruch 1 und Verfahren für die katalytische Umwandlung von Alkohol für den Betrieb von Motoren beschrieben. Vor der katalytischen Umwandlung wird der Alkohol verdampft. Dies erfolgt durch elektrische Beheizung ab der Fahrzeugbatterie. Nachteilig ist, dass dies eine grosse Leistung der Batterie erfordert.

In WO-A-92 20963, in DE-C-585 220 und in FR-A-2 325 815 wird der Brennstoff ohne vorhergehende vollständige Verdampfung, somit mindestens teilweise flüssig, auf einen Katalysator aufgegeben. Wenn Brennstoff in flüssiger Form mit Luft auf einem Katalysator reagiert wird, können Verkrustungen der Katalysatoroberfläche auftreten. Der Katalysator wird dadurch teilweise unwirksam.

In DE-B-28 11 273 wird ein katalytischer Brenner beschrieben, bei dem der Brennstoff anfänglich durch elektrische Beheizung, später durch Wärmedurchgang durch eine keramische Wand verdampft wird. Infolge der kleinen Wärmeleitfähigkeit von Keramik ist hierfür eine grosse Wandfläche erforderlich. Dieser Brenner hat deshalb ein grosses Bauvolumen, was für die Anwendung in Fahrzeugen nachteilig ist.

In DE-A-26 52 337 wird das Brennstoff-Luft-Gemisch durch eine Sprüh- und Verdampfungskammer geleitet, wo der Brennstoff mittels Wärmezufuhr durch Wände verdampft wird. Die Wärmezufuhr durch Wände erfordert ein grosses Bauvolumen des Apparates, was für die Anwendung in Fahrzeugen nachteilig ist.

In DE-A-23 59 542 wird ein Startgerät für Spaltgasgeneratoren gezeigt, bei dem mit Hilfe einer unterstöchiometrischen Flamme ein Lochstein mit Katalysator erhitzt wird. Trotz den angeführten Vorsichtsmassnahmen ist der russfreie Betrieb einer unter-stöchiometrischen Flamme nicht gewährleistet, sodass der nachfolgend angeordnete Katalysator beschädigt werden kann. Ausserdem benötigt der Lochstein beim Starten eine gewisse Zeit bis er heiss ist. Dieses Gerät ist somit für den raschen Kaltstart von Verbrennungsmotoren nicht geeignet.

In US-A-4 884 531 wird der Brennstoff vor einem katalytischen Reforming-Reaktor und dem nachgeschalteten Motor in einem Heizer verdampft. Die Wärmezufuhr zur Verdampfung im Heizer kann nach Angaben in dieser Schrift durch partielle Verbrennung des Brennstoffes in einer unterstöchiometrischen Flamme, durch elektrische Beheizung ab der Fahrzeugbatterie, oder durch Abgasrückführung erfolgen. Bei der partiellen Verbrennung ist die Gefahr der Russbildung vorhanden, wodurch der nachgeschaltete Katalysator zerstört werden kann. Die elektrische Heizung zur Verdampfung erfordert eine hohe Leistung der Fahrzeugbatterie. Die Verdampfung durch Abgasrückführung ist erst einige Zeit nach dem Start des Motors verfügbar. Somit ist die Verdampfer in dem Heizer gemäss US-A-4 884 531 für den raschen Kaltstart von Verbrennungsmotoren nicht geeignet.

In DE-A-23 66 067 wird ein Schichtladungsmotor beschrieben, bei dem die Verdampfung des Brennstoffes mittels Druck, Teilverbrennung und Katalysator erreicht wird. Zur Erzeugung des Druckes muss ein Kolben-Kompressor installiert werden. Diese Vorrichtung ist deshalb aufwendig.

In EP-A-0 022 876 ist ein Starter für Alkohol-Verbrennungsmaschinen beschrieben, bei dem die Verdampfung des Alkohols in einem vom Abgas beheizten Verdampfer erfolgt. Die Verdampfung kann erst erfolgen, wenn das Abgas heiss ist, somit erst einige Zeit nach dem Motorstart. Für den raschen Start eines Verbrennungsmotors kann dieser Starter somit nicht eingesetzt werden.

Ferner sind noch die JP 60-53711 (A) sowie die JP 60-36813 (A) zu erwähnen, die aber zum Kaltstartproblem keine Lösung bieten.

Unserer Erfindung liegt die Aufgabe zu Grunde, die bekannten katalytischen Reaktoren so weiterzubilden,
- dass sie ein kleines Bauvolumen aufweisen und damit günstig in einem Fahrzeug angeordnet werden können,
- dass Benzin mit katalytisch erzeugter Wärme verdampft wird, bevor es auf den Katalysator auftrifft,
- dass rasch Betriebsbereitschaft erreicht wird,
- und dass die Emissionen bei der Inbetriebnahme eines kalte Verbrennungsmotor vermindert werden.
Die Aufgabe wird erfindungsgemäss durch die im Anspruch 1 angegebenen Maßnahmen gelöst.

Vorzugsweise erfolgt die Luftzufuhr beim Kaltstart teilweise durch das Rohr des Katalysators und teilweise durch den Vergaser oder die Einspritzung. Dabei wird die Treibstoffmenge beim Kaltstart gleich oder kleiner als die zur stöchiometrischen Verbrennung erforderliche Treibstoffmenge bemessen. Die Verdampfung oder Vergasung am Katalysator wird nach Erreichen der normalen Betriebstemperatur des Motors abgeschaltet und die Treibstoffzufuhr durch den Vergaser oder die Einspritzung gesteuert.

Bei der katalytischen Verdampfungs-Vorrichtung ist eine Wand senkrecht oder nach unten geneigt angeordnet. Oben wird Benzin auf die Wand aufgebracht. Darunter ist ein Katalysator in kleinem Abstand von der Wand angeordnet. Das Benzin läuft auf der Wand nach unten. Es reagiert mit zugeführter Luft am Katalysator. Dabei entsteht Wärme, die durch Wärmestrahlung an die Wand übertragen wird. Dadurch wird die Verdampfung des Benzins bewirkt. Die in US-P 4 927 353 beschriebene Zwischenwand zwischen einer Mischkammer und einer Austrittsgaskammer entfällt somit in unserer Erfindung.

Nachfolgend werden Ausführungsformen der Erfindung an Hand der Zeichnungen näher erläutert. Es zeigen:
- Fig. 1: eine katalytische Vorrichtung zur Verdampfung von Benzin.
- Fig. 2: schematisch eine Anordnung zum Kaltstart eines Verbrennungsmotors mit verdampftem Benzin,

Fig. 1 zeigt eine katalytische Verdampfungs-Vorrichtung. In einem senkrechten oder nach unten geneigten Rohr 1 ist ein Katalysator 2 angeordnet. Oben wird Luft durch einen Lufteinlass 3 zugeführt. Benzin wird durch eine Düse 4 eingebracht. Weiterhin ist eine an der Fahrzeugbatterie angeschlossene elektrische Vorheizung 5 vorhanden. Zunächst werden der Katalysator 2 und das Rohr 1 mit Hilfe der Vorheizung 5 vorgewärmt. Dann werden Benzin- und Luftzufuhr gestartet. Das Benzin verdampft auf der Rohrwand und reagiert mit der Luft am Katalysator 2, wobei Wärme entsteht. Diese wird durch Wärmestrahlung an die Rohrwand abgegeben und bewirkt dort die Verdampfung des weiter zugeführten Benzins. Die Vorheizung 5 kann deshalb nach dem Einsetzen der Reaktion am Katalysator 2 abgestellt werden.

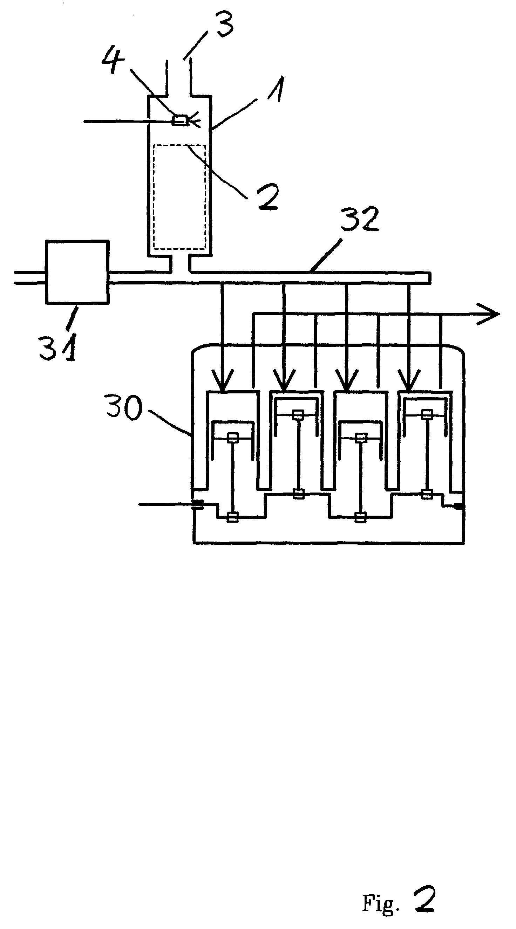

Bei der Anordnung gemäss Fig. 2 ist ein Verbrennungsmotor 30 in bekannter Art mit einem Vergaser oder einer Benzineinspritzung 31, einem Ansaugrohr 32 und Leitungen zu den einzelnen Zylindern versehen. Die katalytische Vorrichtung zur Verdampfung von Benzin ist am Ansaugrohr angeschlossen. Beim Kaltstart des Motors werden der Vorrichtung Benzin (flüssig) und Luft zugeführt. Das Benzin verdampft in der Vorrichtung und gelangt durch das Ansaugrohr 32 in den Verbrennungsmotor 30. Dies erlaubt die Zündung an den Zündkerzen ohne Benzinüberschuss. Der katalytischen Vorrichtung wird nur soviel Luft zugeführt, wie zur Erzeugung der Verdampfungswärme des Benzins erforderlich ist. Dies bedeutet, dass die Luftmenge in der katalytischen Verdampfungs-Vorrichtung unter-stöchiometrisch ist. Die restliche vom Verbrennungsmotor benötigte Luftmenge gelangt durch den Vergaser oder die Einspritzung 31 in den Motor.

Mit Bezug auf Fig. 1 und 2 wird der Kaltstart des Verbrennungsmotors erläutert. Die Benzinmenge durch die Düse 4 wird so eingestellt, dass bei der Ansaugluftmenge des startenden Verbrennungsmotors kein Benzinüberschuss vorhanden ist. Die Luftzufuhr zum Verbrennungsmotor 30 erfolgt durch den Vergaser oder die Benzineinspritzung 31 und den Lufteinlass 3 der katalytischen Vorrichtung. Die Luftmenge, die durch die katalytische Vorrichtung geht, wird durch eine Blende 8 begrenzt, damit sich das Rohr 1 nicht zu stark abkühlt. Nach Erreichen der Betriebstemperatur des Verbrennungsmotors 30 wird die katalytische Vorrichtung durch (in den Figuren nicht gezeigte) Ventile abgesperrt und die Benzinzufuhr zum Vergaser oder der Benzineinspritzung 31 gestartet.

## Patentansprüche

1. Vorrichtung zur katalytischen Verdampfung von Brenn- und Treibstoffen mit einem senkrechten oder nach unten geneigten Rohr (1), einer Treibstoffdüse (4), einem Katalysator (2), einem Lufteinlass (3) und einer elektrischen Vorheizung (5), dadurch gekennzeichnet, dass die Düse (4) auf die Innenwand des Rohres (1) gerichtet ist,
dass der Katalysator (2) in kleinem Abstand von der Wand des Rohres (1) unter der Düse (4) angeordnet ist,
und dass die durch den Lufteinlass (3) eintretende Luftmenge unter-stöchiometrisch zur Brenn- oder Treibstoffmenge ist, wobei der Treibstoff mit zugeführter Luft am vorgeheizten Katalysator (2) reagiert und ein Teil der Reaktionswärme durch Wärmestrahlung an die Wand des Rohres (1) übergeht, wodurch die Verdampfung des auf der Wand nach unten fliessenden Treibstoffes bewirkt wird.

2. Anordnung zur Inbetriebnahme eines kalten Verbrennungsmotors (30) für flüssige Treibstoffe mit Hilfe der Vorrichtung gemäss Anspruch 1, dadurch gekennzeichnet,
dass der Treibstoff mit Hilfe eines Katalysators (2) in den dampfförmigen oder gasförmigen Zustand übergeführt wird und dem Verbrennungsmotor (30) über ein Ansaugrohr (32) zugeführt wird,
und dass der Treibstoff dem Motor beim Kaltstart vorwiegend in verdampfter Form zugeführt wird.

3. Anordnung nach Anspruch 2, dadurch gekennzeichnet,
dass die Luftzufuhr bei der Inbetriebnahme zum einen Teil durch das Rohr (1) des Katalysators (2) und zum anderen Teil du-rch den Vergaser oder die Treibstoffeinspritzung (31) erfolgt, dass die Treibstoffmenge während der Inbetriebnahme gleich oder kleiner ist als die zur stöchiometrischen Verbrennung mit der dem Verbrennungsmotor zugeführten Luft erforderliche Treibstoffmenge, und dass die Verdampfung oder Vergasung am Katalysator (2) nach Erreichen der normalen Betriebstemperatur des Verbrennungsmotors abgeschaltet wird und die Treibstoffzufuhr durch den Vergaser oder die Treibstoffeinspritzung (31) gestartet wird.

## Claims

1. A catalytic fuel evaporation device with a vertical or downward inclined tube (1), a fuel nozzle (4), a catalyst (2), an air inlet (3) and an electrical preheating (5), having the following characteristics
the nozzle (4) is directed towards the inside wall of the tube (1),
the catalyst (2) is arranged in a small distance from the wall of the tube (1) below the nozzle (4),
and the air quantity entering via the air inlet (3) is smaller than the stoichiometric air quantity in relation to the fuel quantity.
The fuel reacts with the air entering the tube (1) at the preheated catalyst (2). The heat of reaction is partially transferred to the wall of the tube (1) by thermal radiation. Thereby, the fuel flowing down on the wall is evaporated.

2. Arrangement for the cold start of an internal combustion engine (30) for liquid fuels using the device of claim 1, wherein
the fuel is transferred to the evaporated or gaseous state by means of a catalyst (2) and fed to the engine (30) via an inlet manifold (32),
and the fuel is fed to the engine during the cold start mainly in the evaporated state.

3. Arrangement according to claim 2, wherein
during the start-up period, the air is supplied partially via the tube (1) of the catalyst (2) and the remaining air via the fuel carburetor or injection (31),
the fuel quantity during the start-up is lower than or equal to the stoichiometric fuel quantity in relation to the air supplied to the engine,
and, after the engine has reached the normal operating temperature, the evaporation or gasification at the catalyst (2) is switched off and the fuel feed via the fuel carburetor or injection (31) is started.

## Revendications

1. Dispositif pour l'évaporation catalytique de combustibles ou de carburants, au moyen d'un tube vertical ou incliné vers le bas (1), d'un gicleur pour le carburant (4), d'un catalyseur (2), d'un passage d'admission d'air (3) et d'un système électrique de préchauffage (5). Ce dispositif est caractérisé par le fait que
- le gicleur (4) est dirigé vers la paroi intérieure du tube (1),
- le catalyseur (2) est placé à une faible distance de la paroi du tube (1), sous le gicleur (4),
- et la quantité d'air pénétrant par le passage d'admission de l'air (3) est du point de vue stoechiométrique inférieure à ce qui serait nécessaire pour la quantité de combustible ou de carburant;
de ce fait, le carburant réagit avec l'air introduit au catalyseur préchauffé (2) et une partie de la chaleur induite par la réaction se transmet à la paroi du tube (1) par rayonnement thermique, ce qui provoque l'évaporation du carburant s'écoulant sur la paroi vers le bas.

2. Procédé pour la mise en marche à froid d'un moteur à combustion interne (30) pour carburants liquides, à l'aide du dispositif selon la revendication 1, caractérisé en ce que
- le carburant est transformé, à l'aide d'un catalyseur (2), en vapeur ou en gaz et transporté au moteur à combustion (30) par un tuyau d'aspiration (32),
- et lors du démarrage à froid le carburant est amené au moteur principalement sous forme de vapeur.

3. Procédé selon la revendication 2, caractérisé en ce que:
- lors de la mise en marche, l'arrivée de l'air se fait en partie au moyen du tube (1) du catalyseur (2) et en partie par le carburateur ou par l'injecteur (31);
- lors de la mise en marche, la quantité de carburant est égale ou inférieure à celle qui est nécessaire pour la combustion stoechiométrique avec l'air amené au moteur à combustion interne, et
- l'évaporation ou la carburation s'arrête au catalyseur (2), après que le moteur à combustion interne a atteint sa température normale de fonctionnement et que l'arrivée de carburant est assurée par le carburateur ou par l'injecteur (31).
